# EUROPÄISCHE PATENTSCHRIFT

(11) **EP 2 655 170 B1**
(45) Veröffentlichungstag und Bekanntmachung des Hinweises auf die Patenterteilung: **05.10.2016**
(21) Anmeldenummer: 11808596.8
(22) Anmeldetag: 22.12.2011
(51) Int. Cl.: B62D 35/00, B62D 35/02, B60T 5/00

(54) **KRAFTFAHRZEUG MIT LUFTLEITVORRICHTUNG ZÜR KÜHLUNG VON DER BREMSENANLAGE**
MOTOR VEHICLE WITH AIR-GUIDING DEVICE FOR COOLING THE BRAKING SYSTEM
VÉHICULE À MOTEUR COMPORTANT UN DISPOSITIF DE GUIDAGE D'AIR POUR REFROIDIR LE SYSTÈME DE FREINAGE

(30) Priorität: 22.12.2010 DE 102010055639
(43) Veröffentlichungstag der Anmeldung: 30.10.2013
(73) Patentinhaber: Volkswagen Aktiengesellschaft, 38436 Wolfsburg (DE)
(72) Erfinder: SCHLÜTER, Mirco, 38442 Wolfsburg (DE); FISCHER, Sylvain, 38444 Wolfsburg (DE); WEICKUM, Matthias, 38112 Braunschweig (DE)
(86) Internationale Anmeldenummer: PCT/EP2011/006525
(87) Internationale Veröffentlichungsnummer: WO 2012/084251

(56) Entgegenhaltungen:
- DE-A1- 4 229 945
- FR-A1- 2 927 303
- FR-A1- 2 959 195
- FR-A1- 2 959 473
- JP-A- 5 105 124
- JP-A- 2006 069 396

## Beschreibung

Die Erfindung betrifft ein Kraftfahrzeug nach dem Oberbegriff des Patentanspruchs 1 der Erfindung.

An Fahrzeugen, insbesondere Kraftfahrzeugen, werden sowohl im Außenhaut- als auch im Uriterbodenbereich unterschiedlichste Maßnahmen zur Verbesserung des c_{W}-Wertes des Fahrzeugs eingesetzt (c_{W}-Wert = Maß für den Strömungswiderstand eines von einem Medium umströmten Körpers). Diese Maßnahmen im Bereich Strömungsoptimierung gewinnen in der technischen Entwicklung zunehmend an Akzeptanz, da sie zur Reduzierung des Verbrauchs an Kraftstoff und damit zur Reduzierung des CO₂-Ausstoßes von Fahrzeugen einen erheblichen Beitrag leisten können.

So ist aus der DE 60 2004 005 135 T2 eine unter dem Bodenblech und beispielsweise vor einem Rad eines Kraftfahrzeugs montierte Luftleitvorrichtung nach Art eines Spoilers bekannt, welche in Abhängigkeit der Geschwindigkeit des Fahrzeugs oder anderer hier nicht näher definierter Randbedingungen vermittels eines Antriebselementes von einer unwirksamen Stellung in eine wirksame Stellung und zurück überführbar ist.

Weiter ist aus der gattungsgemäßen DE 31 50 152 C2 ein Spoiler für Kraftfahrzeuge bekannt, welcher in Abhängigkeit der Fahrzeuggeschwindigkeit und der Kühlmitteltemperatur einer Verbrennungskraftmaschine steuerbar respektive elektrisch oder hydraulisch schwenkbar ist und in einem ausgeschwenkten oder teilweise ausgeschwenkten Betriebszustand zur Kühlluftsteuerung eine dem Motorraum zugeordnete Luftaustrittsöffnung freigibt.

Des Weiteren ist aus der DE 42 29 945 A1 ein Kraftfahrzeug bekannt, bei dem im Frontbereich der Bodenplatte desselben zur Kühlung der Radbremsen Kühlluftkanäle vorgesehen sind, in denen schwenkbare Klappen angeordnet sind, vermittels derer die Kühlluftkanäle in Abhängigkeit von der Temperatur der Radbremsen und demgemäß deren Kühlbedarf sowie gegebenenfalls in Abhängigkeit der Fahrzeuggeschwindigkeit geschlossen oder geöffnet werden können.

Schließlich ist aus der DE 10 2007 022 298 A1 eine Unterbodenverkleidung für ein Kraftfahrzeug mit einem zu kühlenden Aggregat, wie einer Radbremse, bekannt, welche eine vermittels einer schwenkbaren oder linear verschiebbaren Klappe zu verschließende bzw. zu öffnende Einlassöffnung mit Luftleitkanal für einen Kühlluftstrom aufweist. Es sind zunächst zwei Betriebsstellungen besagter Klappe, nämlich eine Offen- und eine Geschlossenstellung zu verzeichnen. Bzgl. einer schwenkbaren Klappe ist eine dritte Betriebsstellung einer mit einem Klappenboden und Seitenwänden ausgestatteten Klappe vorgesehen, bei der dieselbe den Luftleitkanal über die Unterbodenverkleidung hinaus in Richtung der Fahrbahn des Kraftfahrzeugs verlängert, so dass sich in Fahrtrichtung ein definierter Öffnungsquerschnitt für die Abzweigung des Kühlluftstroms ergibt, der direkt von der das Fahrzeug umströmenden Luft beaufschlagt wird.

Aufgabe der Erfindung ist es, ein im Hinblick auf den gewürdigten Stand der Technik bzgl. der Verringerung des Strömungswiderstandes und bzgl. einer situativ ausreichenden Beaufschlagung der Radbremsvorrichtungen mit einem Kühlluftstrom weiter optimiertes Kraftfahrzeug zu schaffen.

Ausgehend von einem Kraftfahrzeug, mit zumindest einem in einer Bodenplatte desselben ausgebildeten Kühlluftkanal zur Beaufschlagung einer Radbremsvorrichtung des Kraftfahrzeugs mit einem Kühlluftstrom, wobei dem zumindest einen Kühlluftkanal ein verstellbares Verschlusselement in Form einer Verschlussplatte zugeordnet ist, welche ihrerseits in Abhängigkeit eines sensierten Betriebszustandes der Radbremsvorrichtung und/oder in Abhängigkeit der Fahrgeschwindigkeit "V_{F}" des Kraftfahrzeugs in eine Betriebsstellung überführbar ist, bei der der Kühlluftkanal zumindest teilweise geöffnet und der Kühlluftstrom gestattet ist und ferner in eine Betriebsstellung überführbar ist, bei der der Kühlluftkanal geschlossen und besagter Kühlluftstrom verhindert ist, wird die gestellte Aufgabe dadurch gelöst, dass überdies eine oder mehrere weitere Betriebsstellung/en der Verschlussplatte vorgesehen ist/sind, bei der dieselbe, einen Radspoiler ausbildend, zum Fahrplanum des Kraftfahrzeugs hin über die Bodenplatte desselben hinausragt.

Durch diese Maßnahme ist vorteilhaft eine Kühlfunktion für eine Radbremsvorrichtung mit einer Radspoilerfunktion in einem einzigen Funktionselement vereint. Hieraus resultieren insbesondere Material-, Kosten- und Gewichtseinsparungen. Zwar ist es aus der eingangs beschriebenen DE 10 2007 022 298 A1 bereits bekannt, eine besonders ausgebildete schwenkbare Verschlussklappe eines Kühlluftkanals über die Unterbodenverkleidung hinaus in Richtung des Fahrplanums des Kraftfahrzeugs zu schwenken, jedoch ist es durch diese Maßnahme explizit bezweckt, in Fahrtrichtung einen definierter Öffnungsquerschnitt des Kühlluftkanals zur Abzweigung eines Kühlluftstroms aus der das Kraftfahrzeug umströmenden Luft zu schaffen. Keineswegs ist durch diese Maßnahme eine Radspoilerfunktion zur strömungsgünstigen Lenkung der das Kraftfahrzeug umströmenden Luft bewirkt und schon gar nicht bezweckt, da die das Kraftfahrzeug umströmende Luft nicht strömungsgünstig um- bzw. abgelenkt, sondern regelrecht abgezweigt wird.

Die Unteransprüche beschreiben bevorzugte Weiterbildungen oder Ausgestaltungen der Erfindung.

Danach kann die für das Schließen oder zumindest teilweise Öffnen des Kühlluftkanals relevante Betriebsstellung der Verschlussplatte durch eine sensierte Temperatur "T_{B}" eines Arbeitsmediums der Radbremsvorrichtung, z. B. durch eine sensierte Temperatur "T_{B}" einer Bremsflüssigkeit, und/oder durch eine sensierte Temperatur "T_{B}" der Radbremsvorrichtung an sich bestimmt sein. Durch diese Maßnahme kann mit geringem technischen Aufwand situativ eine hoch effektive Kühlung der Radbremsvorrichtung bewirkt werden. Ausgehend von der Erkenntnis, dass die Wirksamkeit eines Spoilers mit steigender Geschwindigkeit des Kraftfahrzeugs zunimmt, kann des Weiteren die für das Ausbilden eines Radspoilers relevante Betriebsstellung der Verschlussplatte durch die Fahrgeschwindigkeit "V_{F}" des Kraftfahrzeugs bestimmt sein. Weiter kann eine Zwangs-Betriebsstellung der Verschlussplatte vorgesehen sein, die durch eine sensierte Umgebungstemperatur "T_{U}" des Kraftfahrzeugs insbesondere derart bestimmt ist, dass im Falle es wird eine Umgebungstemperatur "T_{U}" von nahe Null oder unter Null °C (≤ 0 °C) sensiert, die Verschlussplatte ausschließlich in eine Betriebsstellung ohne Radspoilerfunktion und gegebenenfalls mit zumindest teilweise offenem Kühlluftkanal überführbar ist oder überführt wird. Überdies kann auch eine Zwangs-Betriebsstellung der Verschlussplatte vorgesehen sein, die durch die sensierte Fahrgeschwindigkeit "V_{F}" des Kraftfahrzeugs derart bestimmt ist, dass im Falle es wird eine Fahrgeschwindigkeit "V_{F}" des Kraftfahrzeugs unterhalb einer vorbestimmten Grenzgeschwindigkeit "V_{G}" sensiert, die Verschlussplatte ausschließlich in eine Betriebsstellung ohne Radspoilerfunktion überführbar ist oder in eine solche überführt wird. Insofern kann vorgesehen sein, dass bei niedrigen Fahrgeschwindigkeiten "V_{F}" des Kraftfahrzeugs, beispielsweise Fahrgeschwindigkeiten "V_{F}" desselben unter 60 km/h, bei denen c_{W}-Maßnahmen noch nicht so effizient wirken, zugunsten der Bodenfreiheit die Radspoilerfunktion der Verschlussplatte durch Einfahren derselben aufgehoben wird. Hierdurch können Beschädigungen der Verschlussplatte durch schlechte Wege, Kantsteine etc. vermieden werden. Bei höheren Fahrgeschwindigkeiten "V_{F}" des Kraftfahrzeugs, die überwiegend auf weitestgehend planen Wegen gefahren werden, kann dann die Verschlussplatte durch Ausfahren derselben wieder eine Radspoilerfunktion einnehmen. Wie die Erfindung noch vorsieht, kann die Verschlussplatte hydraulisch, pneumatisch, elektrisch, elektro-magnetisch oder elektro-mechanisch betätigt oder betätigbar sein. Ferner kann die Verschlussplatte zur Erreichung ihrer Betriebsstellungen nach Art eines Schiebers linear verschiebbar oder nach Art einer Klappe um eine Dreh- bzw. Schwenkachse verstellbar ausgebildet sein. Schließlich kann die Verschlussplatte optional zumindest eine Luft-Durchgangsöffnung aufweisen, durch welche in der Betriebsstellung eines Radspoilers der Kühlluftkanal zumindest teilweise geöffnet und ein Kühlluftstrom zur Radbremsvorrichtung hin gestattet ist. Diese Maßnahme trägt beispielsweise dem Umstand Rechnung, dass auch bei relativ hohen Geschwindigkeiten eine Kühlung der Radbremsvorrichtungen eines Kraftfahrzeugs erforderlich sein kann, beispielsweise bei langen und steilen Abfahrten mit gegebenenfalls vorgegebenen Geschwindigkeitsbeschränkungen, die eine Betätigung der Radbremsvorrichtungen erforderlich machen.

Die Erfindung wird nachstehend anhand der in den Zeichnungen äußerst schematisch dargestellten Ausführungsbeispiele näher erläutert. Es zeigen:
- Fig. 1: den Vorderwagen eines erfindungsgemäß ausgebildeten Kraftfahrzeugs mit in der Bodenplatte desselben ausgebildeten Kühlluftkanälen zur Beaufschlagung der Radbremsvorrichtungen der Vorderräder mit einem Kühlluftstrom in einer perspektivischen Teilansicht von unten,
- Fig. 2: einen Ausschnitt der Bodenplatte des Kraftfahrzeugs nach fig. 1 samt einem Kühlluftkanal und einem demselben zugeordneten verstellbaren Verschlusselement in Form einer Verschlussplatte in einer perspektivischen Ansicht von vorn,
- Fig. 3: den Kühlluftkanal nach Fig. 2 samt Verschlussplatte in einer Ansicht von hinten,
- Fig. 4 bis 6: den Kühlluftkanal nach fig. 2 oder 3 samt Verschlussplatte in drei unterschiedlichen Betriebsstellungen desselben in einer perspektivischen Ansicht von hinten.

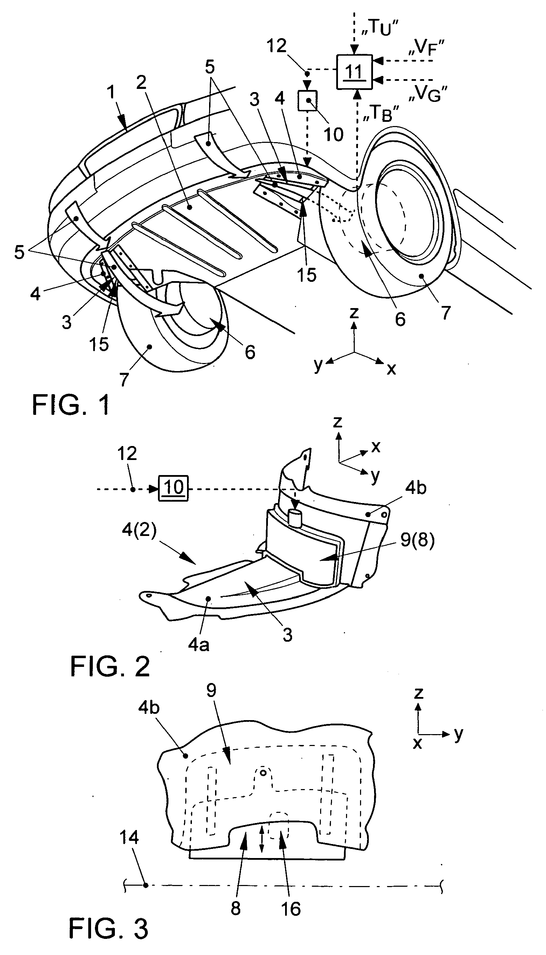

Gemäß Fig. 1 verfügt das Kraftfahrzeug 1 über eine Bodenplatte 2, die den Vorderwagen nach unten hin abschließt und die sich auf besagten c_{W}-Wert des Kraftfahrzeugs 1 vorteilhaft auswirkt. Die Bodenplatte 2 weist sogenannte Kühlluftkanäle 3 aus, die ihrerseits vorliegend jeweils in einem separaten Anbauteil 4 der Bodenplatte 2 mit einem Bodenplattenabschnitt 4a und einem Radhausabschnitt 4b ausgebildet sind (vgl. Fig. 2 ff.). Die Kühlluftkanäle 3 dienen der Zuführung zumindest je eines Kühlluftstroms 5 zu den an sich bekannten Radbremsvorrichtungen 6 der Vorderräder 7 des Kraftfahrzeugs 1.

Jedem Kühlluftkanal 3 ist gemäß den Fig. 2 und 3 ein Verschlusselement in Form einer Verschlussplatte 8 zugeordnet, die sich vorliegend im Wesentlichen in Fahrzeughochrichtung (Z-Richtung) erstreckt und von einem derselben zugeordneten Gehäuse 9 aufgenommen ist. Die Verschlussplatte 8 ist vermittels eines oder mehrerer an sich bekannter, und demgemäß im Detail nicht näher dargestellter, hydraulisch, pneumatisch, elektrisch, elektro-magnetisch oder elektro-mechanisch betriebener Aktuatoren 10 in Fahrzeughochrichtung (Z-Richtung) verstellbar, vorliegend nach Art eines Schiebers linear verschiebbar ausgebildet. Die jeweils mit einem Kühlluftkanal 3 ausgebildeten separaten Anbauteile 4 der Bodenplatte 2 bilden jeweils mit der zugeordneten Verschlussplatte 8, dem dieselbe aufnehmenden Gehäuse 9 und dem/n Aktuator/en 10 ein vormontiertes Modul aus.

Die Verstellung der Verschlussplatte 8 erfolgt in Abhängigkeit eines sensierten Betriebszustandes der Radbremsvorrichtung 6 und/oder in Abhängigkeit der Fahrgeschwindigkeit "V_{F}" des Kraftfahrzeugs 1. Hierzu finden an sich bekannte und demgemäß nicht näher dargestellte Sensoren Anwendung, die ihrerseits elektrisch oder kabellos mit einer ebenfalls an sich bekannten elektronischen Regel- und Steuereinrichtung 11 verbundener sind. In der Regel- und Steuereinrichtung 11 sind vorzugsweise geeignete Referenzwerte hinterlegt, auf Grundlage derer die Regel- und Steuereinrichtung 11 Steuersignale 12 zur Ansteuerung der Aktuatoren 10 generiert.

Was den besagten Betriebszustand der jeweiligen Radbremsvorrichtung 6 anbelangt, wird im Hinblick darauf bevorzugt die Temperatur "T_{B}" des verwendeten Arbeitsmediums der Radbremsvorrichtung 6, beispielsweise die Temperatur "T_{B}" einer Bremsflüssigkeit derselben gemessen und im Ergebnis dessen auf einen etwaigen Kühlungsbedarf der Radbremsvorrichtung 6 geschlossen. Ebenso ist es auch denkbar und demgemäß durch die Erfindung mit erfasst, mittels geeigneter und an einem Gehäuse oder anderen Bauteil der Radbremsvorrichtung 6 angeordneter Sensoren die Temperatur "T_{B}" der Radbremsvorrichtung 6 an sich, d. h., die Temperatur "T_{B}" der Radbremsvorrichtung 6 direkt zu messen und zur Ansteuerung besagter Aktuatoren 10 zu verwenden.

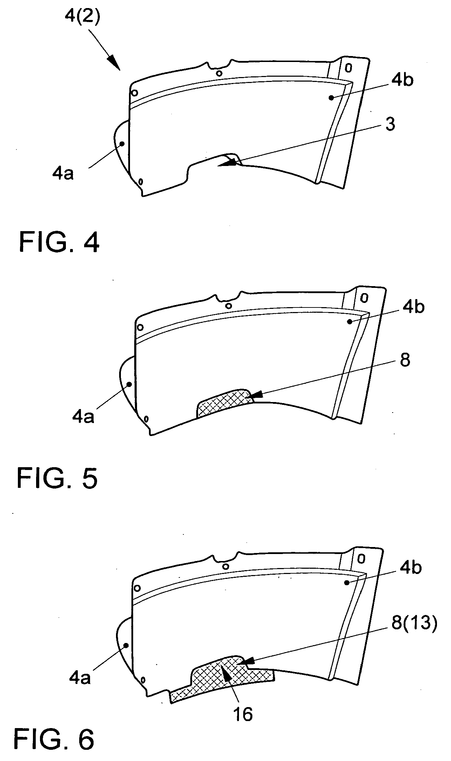

Gesetzt den Fall, mittels besagter Sensoren wird auf einen Kühlungsbedarf einer Radbremsvorrichtung 6 geschlossen, wird die zugeordnete Verschlussplatte 8 in eine Betriebsstellung überführt, in welcher der betreffende Kühlluftkanal 3 geöffnet (vgl. Fig. 4), zumindest jedoch teilweise geöffnet ist und einen Kühlluftstrom 5 zur betreffenden Radbremsvorrichtung 6 gestattet. Demgegenüber ist mangels Kühlungsbedarfs der Radbremsvorrichtung 6 der Kühlluftkanal 3 geschlossen (vgl. Fig. 5), um den Strömungswiderstand (c_{W}-Wert) des Kraftfahrzeugs 1 zu minimieren.

Darüber hinaus oder auch in Kombination mit vorstehender auf einer sensierte Temperatur "T_{B}" der Radbremsvorrichtung 6 beruhenden Regel- und Ansteuerungsvariante der die Verschlussplatte 8 betätigenden Aktuatoren 10 kann die Verschlussplatte 3 auch in Abhängigkeit der sensierten Fahrzeuggeschwindigkeit "V_{F}" von einer Offenstellung in eine Geschlossenstellung und zurück überführt werden und ist demgemäß durch die Erfindung mit erfasst.

Wie insbesondere den Fig. 3 und 6 weiter zu entnehmen ist, sind für die Verschlussplatte 8 eine oder mehrere weitere Betriebsstellungen vorgesehen, bei der dieselbe, einen Radspoiler 13 ausbildend, zum Fahrplanum 14 des Kraftfahrzeugs 1 hin über die Bodenplatte 2 des Kraftfahrzeugs 1 hinausragt. In Bezug darauf verfügt besagtes Anbauteil 4 der Bodenplatte 2 im Bereich seines Bodenplattenabschnittes 4a über eine entsprechende schlitzartige Öffnung 15 (vgl. Fig. 1), die zumindest während der Radspoilerfunktion der Verschlussplatte 8 von derselben durchsetzt ist. Die für das Ausbilden eines Radspoilers 13 relevante Betriebsstellung der Verschlussplatte 8 ist, wie bereits oben ausführlich beschrieben, durch die Fahrgeschwindigkeit "V_{F}" des Kraftfahrzeugs 1 bestimmt.

In umfangreichen Versuchen hat es sich als zweckmäßig erwiesen, eine Zwangs-Betriebsstellung der Verschlussplatte 8 vorzusehen, die durch eine sensierte Umgebungstemperatur "T_{U}" derart bestimmt ist, dass im Falle es wird eine Umgebungstemperatur "T_{U}" von nahe Null oder unter Null °C (≤ 0 °C) sensiert, wobei unter nahe Null °C auch knapp über Null °C, beispielsweise 2-3 °C über Null °C verstanden wird, die Verschlussplatte 8 ausschließlich in eine Betriebsstellung ohne Radspoilerfunktion und gegebenenfalls mit zumindest teilweise offenem Kühlluftkanal 3 überführbar ist oder in eine solche Betriebsstellung überführt wird. Bezug nehmen auf die Fig. 4 und 5 befindet sich die Verschlussplatte 8 in einer Offenstellung oder in einer Geschlossenstellung oder in einer nicht näher dargestellten Zwischenstellung. Hierdurch ist vermieden, dass die Verschlussplatte 8 infolge Frost in einer Betriebsstellung mit Radspoilerfunktion an der Bodenplatte 2 festfriert, welches die Gefahr in sich birgt, dass die Verschlussplatte 8 beim Befahren von schlechten Wegen beschädigt wird.

Darüber hinaus bietet sich auch eine Zwangs-Betriebstellung der Verschlussplatte 8 an, die durch die sensierte Fahrzeuggeschwindigkeit "V_{F}" derart bestimmt ist, dass im Falle es wird eine Fahrzeuggeschwindigkeit "V_{F}" unterhalb einer bestimmten Grenzgeschwindigkeit "V_{G}" sensiert, die Verschlussplatte 8 ausschließlich in eine Betriebsstellung ohne Radspoilerfunktion überführbar ist oder in eine solche Betriebsstellung überführt wird.

Wie bereits vorstehend erläutert, kann danach vorgesehen sein, dass bei niedrigen Fahrzeuggeschwindigkeiten "V_{F}", beispielsweise Fahrzeuggeschwindigkeiten "V_{F}" unter 60 km/h, bei denen c_{W}-Maßnahmen noch nicht so effizient wirken, zugunsten der Bodenfreiheit die Radspoilerfunktion der Verschlussplatte 8 durch Einfahren derselben aufgehoben wird. Hierdurch können Beschädigungen der Verschlussplatte 8 durch schlechte Wege, Kantsteine etc. vermieden werden. Bei höheren Fahrzeuggeschwindigkeiten "V_{F}", die überwiegend auf weitestgehend planen Wegen gefahren werden, kann dann die Verschlussplatte 8 durch Ausfahren derselben wieder eine Radspoilerfunktion einnehmen.

Um auch außergewöhnlichen Betriebsbedingungen des Kraftfahrzeugs 1 Rechnung zu tragen, bei denen die Radbremsvorrichtungen 6 bei relativ hohen Fahrzeuggeschwindigkeiten "V_{F}" einer Kühlung bedürfen, beispielsweise bei langen und steilen Abfahrten mit gegebenenfalls vorgegebenen Geschwindigkeitsbeschränkungen, die eine Betätigung der Radbremsvorrichtungen erforderlich machen, kann die Verschlussplatte 8 gemäß den Fig. 3 und 6 optional zumindest eine Luft-Durchgangsöffnung 16 aufweisen, durch welche in der Betriebsstellung eines Radspoilers der Kühlluftkanal 3 zumindest teilweise geöffnet und ein Kühlluftstrom 5 zur Radbremsvorrichtung 6 hin gestattet ist.

Die vorstehend beschriebenen Ausführungsbeispiele stellen im Wesentlichen auf eine Verschlussplatte 8 ab, die ihrerseits nach Art eines Schiebers linear verstellbar ist. Die Erfindung beschränkt sich jedoch nicht auf eine derart verstellbare Verschlussplatte 8, sondern erfasst auch eine Verschlussplatte 8, die ihrerseits nach Art einer Klappe um eine Dreh- bzw. Schwenkachse verstellbar ausgebildet ist und die vorbeschriebenen unterschiedlichen Betriebsstellungen einnimmt. Die Dreh- bzw. Schwenkachse kann dabei senkrecht zur Ebene der Verschlussplatte 8 oder innerhalb der Ebene der Verschlussplatte 8 angeordnet sein (nicht näher dargestellt).

### Bezugszeichenliste

- 1: Kraftfahrzeug
- 2: Bodenplatte
- 3: Kühlluftkanal
- 4: Anbauteil
- 4a: Bodenplattenabschnitt
- 4b: Radhausabschnitt
- 5: Kühlluftstrom
- 6: Radbremsvorrichtung
- 7: Vorderrad
- 8: Verschlussplatte
- 9: Gehäuse
- 10: Aktuator
- 11: Regel- und Steuereinrichtung
- 12: Steuersignal
- 13: Radspoiler
- 14: Fahrplanum
- 15: Öffnung
- 16: Luft-Durchgangsöffnung
- "V_{F}": Fahrgeschwindigkeit (Kraftfahrzeug 1)
- "V_{G}": Grenzgeschwindigkeit (Kraftfahrzeug 1)
- "T_{B}": Temperatur (Radbremsvorrichtung 6)
- "T_{U}": Umgebungstemperatur

## Patentansprüche

1. Kraftfahrzeug (1), mit zumindest einem in einer Bodenplatte (2) desselben ausgebildeten Kühlluftkanal (3) zur Beaufschlagung einer Radbremsvorrichtung (6) des Kraftfahrzeugs (1) mit einem Kühlluftstrom (5), wobei dem zumindest einen Kühlluftkanal (3) ein verstellbares Verschlusselement in Form einer Verschlussplatte (8) zugeordnet ist, welche ihrerseits in Abhängigkeit eines sensierten Betriebszustandes der Radbremsvorrichtung (6) und/oder in Abhängigkeit der Fahrgeschwindigkeit "V_{F}" des Kraftfahrzeugs (1) in eine Betriebsstellung überführbar ist, bei der der Kühlluftkanal (3) zumindest teilweise geöffnet und der Kühlluftstrom (5) gestattet ist und ferner in eine Betriebsstellung überführbar ist, bei der der Kühlluftkanal (3) geschlossen und besagter Kühlluftstrom (5) verhindert ist, **dadurch gekennzeichnet, dass** überdies eine oder mehrere weitere Betriebsstellung/en der Verschlussplatte (8) vorgesehen ist/sind, bei der dieselbe, einen Radspoiler (13) ausbildend, zum Fahrplanum (14) des Kraftfahrzeugs (1) hin über die Bodenplatte (2) desselben hinausragt.

2. Kraftfahrzeug (1) nach Anspruch 1, **dadurch gekennzeichnet, dass** die für das Schließen oder zumindest teilweise Öffnen des Kühlluftkanals (3) relevante Betriebsstellung der Verschlussplatte (8) durch eine sensierte Temperatur "T_{B}" eines Arbeitsmediums der Radbremsvorrichtung (6) und/oder durch eine sensierte Temperatur "T_{b}" der Radbremsvorrichtung (6) an sich bestimmt ist.

3. Kraftfahrzeug (1) nach einem der Ansprüche 1 oder 2, **dadurch gekennzeichnet, dass** die für das Ausbilden eines Radspoilers (13) relevante Betriebsstellung der Verschlussplatte (8) durch die Fahrgeschwindigkeit "V_{F}" des Kraftfahrzeugs (1) bestimmt ist.

4. Kraftfahrzeug (1) nach einem der Ansprüche 1 bis 3, **dadurch gekennzeichnet, dass** eine Zwangs-Betriebsstellung der Verschlussplatte (8) vorgesehen ist, die durch eine sensierte Umgebungstemperatur "T_{U}" des Kraftfahrzeugs (1) bestimmt ist.

5. Kraftfahrzeug (1) nach Anspruch 4, **dadurch gekennzeichnet, dass** besagte Zwangs-Betriebsstellung derart durch eine sensierte Umgebungstemperatur "T_{U}" des Kraftfahrzeugs (1) bestimmt ist, dass im Falle es wird eine Umgebungstemperatur von nahe Null oder unter Null °C (≤ 0 °C) sensiert, die Verschlussplatte (8) ausschließlich in eine Betriebsstellung ohne Radspoilerfunktion und gegebenenfalls mit zumindest teilweise offenem Kühlluftkanal (3) überführbar ist oder in eine solche Betriebsstellung überführt wird.

6. Kraftfahrzeug (1) nach einem der Ansprüche 1 bis 5, **dadurch gekennzeichnet, dass** eine Zwangs-Betriebsstellung der Verschlussplatte (8) vorgesehen ist, die durch die sensierte Fahrgeschwindigkeit "V_{F}" des Kraftfahrzeugs (1) derart bestimmt ist, dass im Falle es wird eine Fahrgeschwindigkeit "V_{F}" unterhalb einer vorbestimmten Grenzgeschwindigkeit "V_{G}" sensiert, die Verschlussplatte (8) ausschließlich in eine Betriebsstellung ohne Radspoilerfunktion überführbar ist oder in eine solche Betriebsstellung überführt wird.

7. Kraftfahrzeug (1) nach einem der Ansprüche 1 bis 6, **dadurch gekennzeichnet, dass** die Verschlussplatte (8) hydraulisch, pneumatisch, elektrisch, elektro-magnetisch oder elektro-mechanisch betätigt oder betätigbar ist.

8. Kraftfahrzeug (1) nach einem der Ansprüche 1 bis 7, **dadurch gekennzeichnet, dass** die Verschlussplatte (8) zur Erreichung ihrer Betriebsstellungen nach Art eines Schiebers linear verschiebbar oder nach Art einer Klappe um eine Dreh- bzw. Schwenkachse verstellbar ausgebildet ist.

9. Kraftfahrzeug (1) nach einem der Ansprüche 1 bis 8, **dadurch gekennzeichnet, dass** die Verschlussplatte (8) zumindest eine Luft-Durchgangsöffnung (16) aufweist, durch welche in der Betriebsstellung eines Radspoilers (13) der Kühlluftkanal (3) zumindest teilweise geöffnet und ein Kühlluftstrom (5) zur Radbremsvorrichtung (6) hin gestattet ist.

## Claims

1. Motor vehicle (1) having at least one cooling air duct (3) which is formed in a base plate (2) thereof and has the purpose of applying a cooling air flow (5) to a wheel brake device (6) of the motor vehicle (1), wherein an adjustable closure element in the form of a closure plate (8) is assigned to the at least one cooling air duct (3), said closure plate being capable of being transferred itself into an operating position as a function of a sensed operating state of the wheel brake device (6) and/or as a function of the velocity "V_{F}" of the motor vehicle (1), in which operating position the cooling air duct (3) is at least partially opened and the cooling air flow (5) is permitted, and in addition can be transferred into an operating position in which the cooling air duct (3) is closed and said cooling air flow (5) is prevented, **characterized in that** in addition one or more further operating positions of the closure plate (8) are provided, in which said closure plate (8) projects towards the driving plane (14) of the motor vehicle (1), via the base plate (2) thereof, so as to form a wheel spoiler (13).

2. Motor vehicle (1) according to Claim 1, **characterized in that** the operating position of the closure plate (8), which is relevant for the closing or at least partial opening of the cooling air duct (3), is determined per se by a sensed temperature "T_{B}" of a working medium of the wheel brake device (6) and/or by a sensed temperature "T_{B}" of the wheel brake device (6).

3. Motor vehicle (1) according to one of Claims 1 or 2, **characterized in that** the operating position of the closure plate (8), which is relevant for the formation of a wheel spoiler (13), is determined by the velocity "V_{F}" of the motor vehicle (1).

4. Motor vehicle (1) according to one of Claims 1 to 3, **characterized in that** a forced operating position of the closure plate (8) is provided, which forced operating position is determined by a sensed ambient temperature "T_{U}" of the motor vehicle (1).

5. Motor vehicle (1) according to Claim 4, **characterized in that** said forced operating position is determined by a sensed ambient temperature "T_{U}" of the motor vehicle (1) in such a way that in the event of an ambient temperature of close to zero or less than zero °C (≤ 0°C) being sensed, the closure plate (8) can be transferred exclusively into an operating position without a wheel spoiler function and, if appropriate, with an at least partially open cooling air duct (3) or is transferred to such an operating position.

6. Motor vehicle (1) according to one of Claims 1 to 5, **characterized in that** a forced operating position of the closure plate (8) is provided which is determined by the sensed velocity "V_{F}" of the motor vehicle (1) in such a way that in the event of a velocity "V_{F}" below a predetermined limiting velocity "V_{G}" being sensed, the closure plate (8) can be transferred exclusively into an operating position without a wheel spoiler function or is transferred into such an operating position.

7. Motor vehicle (1) according to one of Claims 1 to 6, **characterized in that** the closure plate (8) is or can be activated hydraulically, pneumatically, electrically, electro-magnetically or electro-mechanically.

8. Motor vehicle (1) according to one of Claims 1 to 7, **characterized in that** the closure plate (8) is designed to be linearly displaceable in the manner of a slide or to be adjustable in the manner of a flap about a rotational axis or pivoting axis in order to reach its operating positions.

9. Motor vehicle (1) according to one of Claims 1 to 8, **characterized in that** the closure plate (8) has at least one air passage opening (16), by means of which the cooling air duct (3) is at least partially opened in the operating position of a wheel spoiler (13) and a cooling air flow (5) towards the wheel brake device (6) is permitted.

## Revendications

1. Véhicule à moteur (1), avec au moins un canal d'air de refroidissement (3) formé dans une plaque de fond (2) de celui-ci pour alimenter un dispositif de frein de roue (6) du véhicule à moteur (1) avec un courant d'air de refroidissement (5), dans lequel un élément de fermeture réglable est associé audit au moins un canal d'air de refroidissement (3), sous la forme d'une plaque de fermeture (8), qui peut à son tour, en fonction d'un état de fonctionnement détecté du dispositif de frein de roue (6) et/ou en fonction de la vitesse de roulage "V_{F}" du véhicule à moteur (1), être amenée dans une position de fonctionnement dans laquelle le canal d'air de refroidissement (3) est au moins partiellement ouvert et le courant d'air de refroidissement (5) est autorisé, et être en outre amenée dans une position de fonctionnement dans laquelle le canal d'air de refroidissement (3) est fermé et ledit courant d'air de refroidissement (5) est empêché, **caractérisé en ce qu'**il est en outre prévu une ou plusieurs autre(s) position(s) de fonctionnement de la plaque de fermeture (8), dans laquelle/lesquelles celle-ci s'étend en direction du plan de roulage (14) du véhicule à moteur (1) au-delà de la plaque de fond (2) de celui-ci en formant un déflecteur de roue (13).

2. Véhicule à moteur (1) selon la revendication 1, **caractérisé en ce que** la position de fonctionnement de la plaque de fermeture (8) importante pour la fermeture ou l'ouverture au moins partielle du canal d'air de refroidissement (3) est déterminée en soi par une température détectée "T_{B}" d'un fluide de travail du dispositif de frein de roue (6) et/ou par une température détectée "T_{B}" du dispositif de frein de roue (6).

3. Véhicule à moteur (1) selon une des revendications 1 ou 2, **caractérisé en ce que** la position de fonctionnement de la plaque de fermeture (8) importante pour la formation du déflecteur de roue (13) est déterminée par la vitesse de roulage "V_{F}" du véhicule à moteur (1).

4. Véhicule à moteur (1) selon l'une quelconque des revendications 1 à 3, **caractérisé en ce qu'**il est prévu une position de fonctionnement forcée de la plaque de fermeture (8), qui est déterminée par une température ambiante détectée "T_{U}" du véhicule à moteur (1).

5. Véhicule à moteur (1) selon la revendication 4, **caractérisé en ce que** ladite position de fonctionnement forcée est déterminée par une température ambiante détectée "T_{U}" du véhicule à moteur (1), de telle manière que, dans le cas où l'on détecte une température ambiante proche de zéro ou inférieure à zéro °C (≤ 0°C), la plaque de fermeture (8) puisse être amenée exclusivement dans une position de fonctionnement sans fonction de déflecteur de roue et éventuellement avec un canal d'air de refroidissement (3) au moins partiellement ouvert ou soit amenée dans une telle position de fonctionnement.

6. Véhicule à moteur (1) selon l'une quelconque des revendications 1 à 5, **caractérisé en ce qu'**il est prévu une position de fonctionnement forcée de la plaque de fermeture (8), qui est déterminée par la vitesse de roulage détectée "V_{F}" du véhicule à moteur (1), de telle manière que, dans le cas où l'on détecte une vitesse de roulage "V_{F}" inférieure à une vitesse limite prédéterminée "V_{G}", la plaque de fermeture (8) puisse être amenée exclusivement dans une position de fonctionnement sans fonction de déflecteur de roue ou soit amenée dans une telle position de fonctionnement.

7. Véhicule à moteur (1) selon l'une quelconque des revendications 1 à 6, **caractérisé en ce que** la plaque de fermeture (8) est ou peut être actionnée par voie hydraulique, pneumatique, électrique, électromagnétique ou électromécanique.

8. Véhicule à moteur (1) selon l'une quelconque des revendications 1 à 7, **caractérisé en ce que** la plaque de fermeture (8) est réalisée, pour atteindre ses positions de fonctionnement, sous forme coulissante linéairement à la manière d'un curseur ou sous forme déplaçable autour d'un axe de rotation ou de pivotement à la manière d'un clapet.

9. Véhicule à moteur (1) selon l'une quelconque des revendications 1 à 8, **caractérisé en ce que** la plaque de fermeture (8) présente au moins une ouverture de passage d'air (16), à travers laquelle, dans la position de fonctionnement d'un déflecteur de roue (13), le canal d'air de refroidissement (3) est au moins partiellement ouvert et un courant d'air de refroidissement (5) en direction du dispositif de frein de roue (6) est autorisé.
